**Europäisches Patentamt**

**European Patent Office**

**Office européen des brevets**

(11) Veröffentlichungsnummer: **0 469 163 A1**

# EUROPÄISCHE PATENTANMELDUNG

(21) Anmeldenummer: **90114606.8**

(22) Anmeldetag: **30.07.90**

(51) Int. Cl.5: **H02P 7/628**

(43) Veröffentlichungstag der Anmeldung:
**05.02.92 Patentblatt 92/06**

(84) Benannte Vertragsstaaten:
**DE ES FR IT NL SE**

(71) Anmelder: **ABUS WERNER BÜHNE KG.**
**Sonnenweg 1**
**W-5270 Gummersbach 1(DE)**

(72) Erfinder: **Bube, Eckhard, Dipl.-Ing.**
**Immertweg 10**
**W-5270 Gummersbach(DE)**
Erfinder: **Bühne, Werner, Dipl.-Ing.**
**Talsperrenweg 1**
**W-5270 Gummersbach(DE)**

(74) Vertreter: **Dörner, Lothar, Dipl.-Ing.**
**Stresemannstrasse 15**
**W-5800 Hagen 1(DE)**

(54) **Kettenzug.**

(57) Ein von einem Drehstrom-Asynchronmotor (4) mit Kurzschlußläufer angetriebener Kettenzug (5) soll aus einem einphasigen Wechselstromnetz (1) mit variabler Hubgeschwindigkeit betrieben werden. Möglich wird dies durch einen Spannungszwischen-kreisumrichter (2), der netzseitig aus dem Wechsel-stromnetz (1) gespeist ist und lastseitig ein Dreh-stromnetz (3) speist, mit dem der Asynchronmotor (4) verbunden ist.

Technisches Gebiet:

Die Erfindung betrifft einen mit variabler Hubgeschwindigkeit arbeitenden Kettenzug, der von einem Asynchronmotor mit Kurzschlußläufer angetrieben ist, der aus einem Drehstromnetz gespeist ist.

Stand der Technik:

Der insbesondere wegen seines einfachen Aufbaus bei weitem am häufigsten verwendete Drehstromantrieb ist der Asynchronmotor mit Kurzschlußläufer. Einer seiner Nachteile besteht darin, daß seine Drehzahl proportional der Frequenz des speisenden Drehstromnetzes und umgekehrt proportional seiner Polpaarzahl ist, also nicht veränderbar ist, wenn er ohne Zwischenschaltung von Steuergliedern aus einem Drehstromnetz gespeist wird. Wegen der Notwendigkeit, Kettenzüge mit verschiedenen Hubgeschwindigkeiten zu betreiben, werden daher ganz überwiegend polumschaltbare Asynchronmotoren verwendet. Bei Verwendung eines solchen Asynchronmotors als Antrieb erfolgt der Betrieb des Kettenzugs mit stufenweise veränderbarer Hubgeschwindigkeit. Zum Betrieb der Asynchronmaschine wird zumeist ein Drehstromnetz konstanter Frequenz und Spannung verwendet. Eine stufenlose Steuerung der Hubgeschwindigkeit des Hebezeugs ist in diesem Fall nicht möglich.

Darstellung der Erfindung:

Hier will die Erfindung Abhilfe schaffen. Der Erfindung liegt die Aufgabe zugrunde, einen Antrieb für einen über einen Asynchronmotor mit Kurzschlußläufer angetriebenen Kettenzug zu schaffen, der aus einem Einphasen-Netz gespeist werden kann und dessen Drehzahl stufenlos verstellbar ist. Gemäß der Erfindung wird diese Aufgabe gelöst durch einen Spannungszwischenkreisumrichter, der netzseitig aus einem einphasigen Wechselstromnetz gespeist und lastseitig mit dem Drehstromnetz verbunden ist, aus dem der den Kettenzug antreibende Asynchronmotor gespeist ist.

Ein Spannungszwischenkreisumrichter besteht aus einem netzseitigen und einem lastseitigen Stromrichter, die über einen Zwischenkreis miteinander verbunden sind. Der Zwischenkreis besteht aus einem kapazitiven und/oder induktiven Energiespeicher. Er bewirkt eine Entkopplung zwischen Last und Netz. Der Zwischenkreis führt eine eingeprägte Spannung. Bei dem erfindungsgemäß verwendeten Spannungszwischenkreisumrichter erfolgt eine zweimalige Energieumformung: Die Wechselspannung aus dem Wechselstromnetz wird in eine Gleichspannung umgeformt. Aus der Gleichspannung wird ein Drehstrom frequenzvariabler Spannung erzeugt. Aus dem Drehstromnetz variabler Frequenz wird der Asynchronmotor gespeist. Seine Drehzahl ist proportional der Frequenz des speisenden Drehstromnetzes. Damit ist der von dem Asynchronmotor angetriebene Kettenzug in seiner Hubgeschwindigkeit stufenlos variabel.

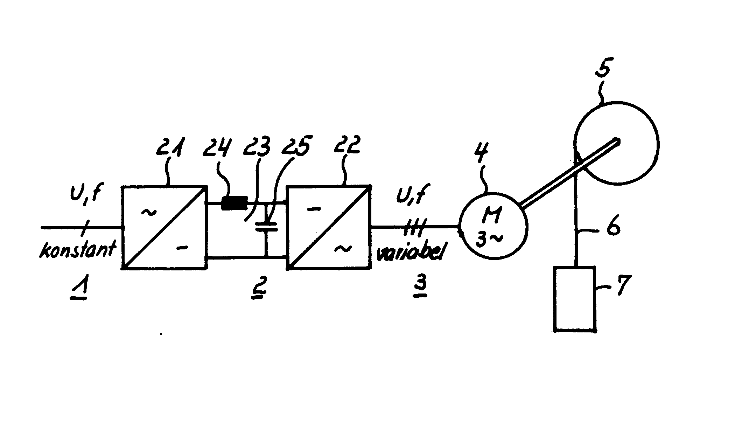

Kurze Beschreibung der Zeichnung:

Ein Ausführungsbeispiel der Erfindung ist in der Zeichnung dargestellt und wird nachfolgend im einzelnen beschrieben. Die einzige Figur zeigt das Schaltbild eines von einem Asynchronmotor angetriebenen Kettenzugs.

Bester Weg zur Ausführung der Erfindung:

Ein einphasiges Wechselstromnetz 1 bildet das speisende Netz für die gesamte Anordnung. Das Wechselstromnetz 1 hat konstante Spannung und konstante Frequenz. Mit dem Wechselstromnetz 1 ist netzseitig ein Spannungszwischenkreisumrichter 2 verbunden. Der Spannungszwischenkreisumrichter 2 weist einen Eingangsstromrichter 21 sowie einen selbstgeführten Wechselrichter 22 auf, die über einen Gleichspannungszwischenkreis 23 miteinander verbunden sind. Der Gleichspannungszwischenkreis 23 weist in seiner Verbindungsleitung zwischen dem Eingangsstromrichter 21 und dem selbstgeführten Wechselrichter eine Glättungsdrossel 24; parallel zwischen den Verbindungsleitungen einen Kondensator 25 auf. Der Eingangsstromrichter 21 richtet die Netzspannung aus dem Wechselstromkreis 1 gleich und stellt die Spannung im Zwischenkreis 23 ein. Der aus dem Gleichspannungszwischenkreis 23 gespeiste selbstgeführte Wechselrichter 22 erzeugt durch Ansteuern von sechs Leistungshalbleitern ein Drehstromnetz 3, das lastseitig mit einem Asynchronmotor 4 mit Kurzschlußläufer verbunden ist. Die Frequenz des Drehstromnetzes 3 ist variabel. In Abhängigkeit von der Frequenz des Drehstromnetzes 3 ändert sich die Drehzahl des Asynchronmotors 4.

Von dem Asynchronmotor 4 ist mechanisch ein Kettenzug 5 angetrieben. Bestandteil des Kettenzugs 5 ist eine Kette 6, an der eine Last 7 anhängbar ist. Die Drehrichtung des Asynchronmotors 4 ist umkehrbar, folglich die Last 7 heb- und senkbar, und zwar wegen der unterschiedlichen Frequenz und damit der unterschiedlichen Drehzahl des Asynchronmotors 4 mit unterschiedlicher Hubgeschwindigkeit.

Gewerbliche Verwertbarkeit:

Die Erfindung ist anwendbar bei allen Kettenzügen, die aus einem einphasigen Wechselstromnetz mit variabler Hubgeschwindigkeit gesteuert werden sollen.

## Patentansprüche

1. Mit variabler Hubgeschwindigkeit arbeitender Kettenzug, der von einem Asynchronmotor mit Kurzschlußläufer angetrieben ist, der aus einem Drehstromnetz gespeist ist, gekennzeichnet durch einen Spannungszwischenkreisumrichter (2), der netzseitig aus einem einphasigen Wechselstromnetz (1) gespeist und lastseitig mit dem Drehstromnetz (3) verbunden ist, aus dem der den Kettenzug (5) antreibende Asynchronmotor (4) gespeist ist.

Europäisches Patentamt

**EUROPÄISCHER RECHERCHENBERICHT**

Nummer der Anmeldung

EP 90 11 4606

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | ELEKTRONIK. vol. 36, no. 19, 18 September 1987, MUNCHEN DE Seiten 111 - 117; Dipl.Ing.E.KIEL: "Drehstrommotor von ASIC gesteuert" * Spalte 1, Zeile 34 - Spalte 2, Zeile 19; Figur 1 * | 1 | H02P7/628 |
| A | GB-A-2119590 (MITSUBISHI D.K.K.) * Seite 1, Zeilen 7 - 9; Figur 1 * | 1 | |

**RECHERCHIERTE SACHGEBIETE (Int. Cl.5)**

H02P

Der vorliegende Recherchenbericht wurde für alle Patentansprüche erstellt

| Recherchenort | Abschlußdatum der Recherche | Prüfer |
|---|---|---|
| BERLIN | 09 OKTOBER 1990 | LEOUFFRE, M |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument
................................................................
& : Mitglied der gleichen Patentfamilie, übereinstimmendes Dokument